# EUROPÄISCHE PATENTSCHRIFT

(11) **EP 0 582 968 B1**
(45) Veröffentlichungstag und Bekanntmachung des Hinweises auf die Patenterteilung: **28.01.1998**
(21) Anmeldenummer: 93112542.1
(22) Anmeldetag: 05.08.1993
(51) Int. Cl.: B32B 27/18, B32B 27/32, B32B 27/36, C08J 5/12

(54) **Kunststoffolie mit verbesserter Wasserdampfsperre für feuchtigkeitsempfindliche Produkte**
Plastic film with improved water-vapor-barrier for moisture sensitive products
Film en plastic à barrière améliorée contre la vapeur de l'eau pour produits sensibles à la humidité

(30) Priorität: 12.08.1992 DE 4226621
(43) Veröffentlichungstag der Anmeldung: 16.02.1994
(73) Patentinhaber: TRANSPAC, N.V., 1050 Bruxelles (BE)
(72) Erfinder: Depuydt, Andre, B-9000 Gent (BE)
(74) Vertreter: Meyers, Ernest

(56) Entgegenhaltungen:
- EP-A- 0 059 274
- EP-A- 0 262 230
- EP-A- 0 446 486
- DATABASE WPIL, Nr. 87-154 577 DERWENT PUBLICATIONS LTD, London, GB

## Beschreibung

Die Erfindung betrifft eine mehrschichtige Kunststoffolie mit verbesserter Wasserdampfsperre, ein verfahren zu deren Herstellung und die Verwendung derartiger Folien zur Verpackung feuchtigkeitsempfindlicher Produkte.

Kunststoffolien mit Wasserdampfsperre sind an sich bekannt. Die DE-A-35 34 400 beschreibt eine Folie für die Verpackung von Genuss- und Lebensmitteln, die aus einer koextrudierten, mehrschichtigen, biaxial gestreckten Polypropylenfolie besteht, wobei die Folie zur Verbesserung der Sperreigenschaften zumindest auf einer Seite metallisiert ist.

Die DE-A-39 10 103 offenbart eine metallschichtfreie, sperrschichthaltige Mehrschichtfolie mit verbessertem Sperrverhalten gegen Gas und Wasserdampf mit folgendem Schichtaufbau:
eine mit einem Schutzlack versehene PVAL-Schicht,
eine Verbindungs- oder Klebeschicht,
eine Polyolefinschicht,
eine Verbindungs- oder Klebeschicht,
eine wenigstens mit einer Polyamidschicht versehene EVA-Schicht,
eine Verbindungs- oder Klebeschicht und
eine Polyolefinschicht.

Zur Absorption größerer Wassermengen in flüssigem oder dampfförmigem Zustand sind Polymere auf der Basis von vernetzter Acrylsäure, die teilweise oder völlig verseift als Natrium- oder Kaliumsalz vorliegen, Copolymere von Acrylsäure mit Acrylamid oder Polyvinylalkohol, Copolymere von Isobutylen mit Maleinsäureanhydrid sowie Reaktionsprodukte aus hydrolisierten Stärke-Polyacrylnitril-Propfcopolymer und einem Polyalkohol entwickelt worden. Diese können Wasser bis zum mehrhundertfachen ihres Eigengewichtes absorbieren. Sie werden im Handel als Pulver unterschiedlicher Korngröße angeboten und mit dem allgemeinen Begriff Super absorbierende Polymere SAP bezeichnet.

Das Haupteinsatzgebiet dieser SAP liegt auf dem Hygienesektor bei Windeln und Inkontinenzunterlagen, wo es gilt, größere Flüssigkeitsmengen schnell festzuhalten. Ein weiteres Einsatzgebiet ist die Isolierung von elektrischen und optischen Kabeln gegen Feuchtigkeitseinbruch, Wasserabsorption in Fleisch- oder Fischverpackungsmaterial sowie die Anwendung im Gartenbau und Landwirtschaft zur Wasserspeicherung.

Die Verbindung derartiger SAP-Pulver mit einer Kunststoffolie zur Wasserabsorption wird durch die EP-B-0 074 179 gelehrt. Die EP-A-0 262 230 offenbart die Herstellung von SAP-haltigen Folien oder Fasern, wobei eine zweischichtige Kunststoffolie aus einem hochschmelzenden und einem niederschmelzendem Kunststoff bis zum Schmelzpunkt des niederschmelzenden Kunststoffes erhitzt wird und dann das SAP-Pulver auf die geschmolzene Schicht aufgetragen wird, wo es sich beim Abkühlen dieses Kunststoffes fest mit diesem verbindet.

Die EP-B-0 209 165 offenbart ein thermoplastisches SAP, das mit anderen Thermoplasten, wie z. B. Polyolefine, verschnitten werden kann. Aus der Mischung können u. a. Folien für die Lebensmittelverpackung hergestellt werden.

Die DE-A-37 02 537 offenbart einen Folienverbund auf miteinander verklebten Folien, bei dem die Klebeschicht ein hydrophiles Polymerpulver enthält und wobei der Folienverbund eine zusätzliche Sauerstoffsperrschicht aufweist. Dieser Folienverbund wird in einer Stärke von 610 bis 1.000 µm zur Herstellung von Mehrschichtflaschen verwendet, die zur Aufnahme von Nahrungs- und Arzneimitteln bestimmt sind. Zur Herstellung flexibler, wasserdampfdichter Verpackungen sind diese Folienverbunde nicht geeignet.

Die EP-B-0 059 274 offenbart ebenfalls einen Folienverbund mit Sauerstoffsperrschicht und zwischen zwei Außenlagen eingearbeiteten hydrophilen Agenzien. Die Außenschichten aus Polyolefin sind symmetrisch aufgebaut und weisen eine Stärke von 366 bis 431 µm auf, die Gesamtstärke des Folienverbundes beträgt ca. 1.000 µm, so daß der Verbund zur Herstellung flexibler Verpackungen nicht geeignet ist.

Als mehrschichtig aufgebaute Folien mit Wasserdampfsperre haben sich in der Vergangenheit jene, die eine Metallschicht aufweisen, solange bewährt, soweit die Metallschicht keinen negativen Einfluß auf das Verpackungsgut ausübte. War dies zu befürchten, mußten aufwendige, in der Herstellung teure Mehrschichtkonstruktionen herangezogen werden, die sich jedoch in der Praxis nicht bewährten.

Die inzwischen erhobene Forderung nach einem Recycling auch von Kunststoffolien zwecks Mehrfachbenutzung der Rohstoffe verbietet die bisher bekannten Materialkomponenten mit ihren an sich günstigen Eigenschaften, da diese Kombinationen gar nicht oder nur unter großen Schwierigkeiten in die einzelnen Bestandteile aufgetrennt werden können.

Aufgabe der vorliegenden Erfindung ist es daher, einen Folienverbund mit verbesserter Wasserdampfsperre zur Verpackung feuchtigkeitsempfindlicher oder hygroskopischer Produkte zur Verfügung zu stellen, der keine Metallschicht aufweist und nach bestimmungsgemäßem Gebrauch recycelt werden kann.

Die Aufgabe wird durch den kennzeichnenden Teil des Anspruches 1 und die darauf zurückbezogenen Unteransprüche gelöst, indem der Folienverbund bezüglich der Wasserdampfdurchlässigkeit der Einzelkunststoffolien einen asymmetrischen Aufbau aufweist, wobei die dem Verpackungsgut zugekehrte Kunststoffolie eine Wasserdampfdurchlässigkeit von 2 bis 10 g/m² · 24 h bei 38 °C und 90 % r. F., die nach außen gekehrte Kunststoffolie eine Wasserdampfdurchlässigkeit von 5 bis 20 g/m² · 24 h bei 38 °C und 90 % r. F. aufweist.

Für die einzelnen Folien, die mittels Verklebung verbunden sind, werden Kunststoffolien herangezogen, die selbst schon durch eine gute Wasserdampfsperre ausgezeichnet sind.

Bevorzugt werden dafür nicht gereckte oder biaxial gereckte Folien aus Polyolefinen, wie Polyäthylen und Polypropylen oder Polyester herangezogen. Je nach Verwendungszweck kann die für den bestimmungsgemäßen Einsatz vorgesehene Außenseite des Folienverbundes eine Lackschicht aufweisen, während die Innenseite mit einer zusätzlichen an sich bekannten heißsiegelfähigen Schicht versehen ist.

Der erfindungsgemäße Folienverbund mit verbesserter Wasserdampfsperre besteht aus einer ersten Kunststoffolie, einer aus lösungsmittelhaltigen oder lösungsmittelfreien Kleber oder ein Heißschmelzkleber gebildeten Klebschicht, die 10 bis 50 Gew.% fein verteiltes wasserabsorbierendes Polymerpulver (SAP) enthält und in einer Menge von 1 bis 10 g/m² aufgetragen ist und ggf. nach Entfernen des Lösungsmittels mit der 2. Kunststoffolie mittels Kaschieren verbunden ist.

Als Kleber haben sich an sich bekannte Klebstoffe bewährt, die lösungsmittelhaltig, lösungsmittelfrei oder Heißschmelzkleber sind. Als Beispiele werden Klebelacke, Acrylate oder andere neben den Heißschmelzklebern angeführt. Diese werden vor dem Auftragen auf die erste Kunststoffolie derart mit dem wasserabsorbierenden Polymerpulver (SAP) vermischt, daß sie davon einen Anteil von 10 bis 50 Gew.% enthalten. Die Stärke der den Folienverbund verbindenden Klebeschicht wird vorteilhafterweise zwischen 1 und 10 µm ausgewählt. Dünnere Klebeschichten neigen zur mangelhaften Ausbildung der Klebeschicht, während dickere Klebeschichten neben überhöhtem Kleberverbrauch zum Delaminieren des Folienverbundes führen können.

Die mittlere Korngröße des wasserabsorbierenden Polymerpulvers (SAP) wird in Anpassung an die Klebeschichtstärke vorteilhafterweise zwischen 1 und 10 µm ausgewählt. Geringere Korngrößen sind schwierig herzustellen, während Korngrößen über 10 um die gleichmäßige Ausbildung des Folienverbundes bezüglich seiner Gesamtstärke nachteilig beeinflussen.

Eine bevorzugte Ausführung des erfindungsgemäßen Folienverbundes weist eine dem Verpackungsgut zugekehrte Kunststoffolie mit einer Wasserdampfdurchlässigkeit von 2 bis 10 g/m² · 24 h (38 ^{o}C, 90 % r. F.) und eine Folienstärke von 20 bis 40 µm auf, während die nach außen gekehrte Kunststoffolie mit einer wasserdampfdurchlässigkeit von 5 bis 20 g/m² · 24 h (38 °C, 90 % r. F.) eine Folienstärke von 12 bis 25 µm aufweist.

Bei besonders hohen Anforderungen an die Wasserdampfsperreigenschaften des Folienverbundes wird der Vorgang des Klebens oder Kaschierens ein- oder mehrmals wiederholt. Dadurch wird ein drei- oder mehrlagiger Folienverbund erhalten, der den gestellten Anforderungen genügt. Bei einem drei- oder mehrlagigen Folienverbund hat sich dabei der folgende Aufbau besonders bewährt:

Erste Außenfolie: Wasserdampfdurchlässigkeit von 5 bis 20 g/m²/24 Std. (38 °C, 90 % r. F.),
Klebeschicht 1 bis 10 µm mit wasserabsorbierendem Polymerpulver (SAP) in einem Anteil von 10 bis 50 Gew.%,
darauf kaschiert mittlere Folie mit einer Wasserdampfdurchlässigkeit von 5 bis 20 g/m²/24 Std. (38 ^{o}C, 90 % r. F.),
zweite Klebeschicht 1 bis 10 µm mit wasserabsorbierendem Polymerpulver (SAP) in einem Anteil von 10 bis 50 Gew.%
und darauf kaschiert Innenfolie mit einer Wasserdampfdurchlässigkeit von 2 bis 10 g/m²/24 Std. (38 °C, 90 % r. F.).

Ein weiteres Verfahren zum Herstellen eines erfindungsgemäßen Folienverbundes mit verbesserter Wasserdampfsperre besteht darin, daß die Oberfläche einer ersten Kunststoffolie mittels Energiezufuhr auf die Temperatur wenig unterhalb des Schmelzpunktes gebracht wird. Anschließend wird auf die derart klebrig gemachte Oberfläche mittels einer Verteilvorrichtung das wasserabsorbierende Polymerpulver (SAP) in einer Menge von 0,5 bis 5 g/m² aufgebracht. Daran anschließend wird eine zweite Kunststoffolie, deren eine Oberfläche ebenfalls durch Energiezufuhr klebrig gemacht wurde, unter Druckanwendung mit der klebrigen Seite der ersten Folie verbunden.

Zweckmäßigerweise wird bei diesem Verfahren als erste Kunststoffolie eine coextrudierte Zweischichtfolie herangezogen, die aus Kunststoffen mit unterschiedlichem Schmelzpunkt zusammengesetzt ist und eine Wasserdampfdurchlässigkeit von 2 bis 10 g/m²/24 Std. (38 °C, 90 % r. F.) aufweist. Damit ist gewährleistet, daß der Folienanteil mit dem höheren Schmelzpunkt während des Erwärmens bis wenig unterhalb des Schmelzpunktes des anderen Folienanteils genügend Festigkeit behält. Die Wasserdampfdurchlässigkeit der aufzukaschierenden zweiten Kunststoffolie wird zweckmäßigerweise zwischen 5 und 20 g/m²/24 Std. (38 °C, 90 % r. F.) ausgewählt.

In einer weiteren Ausgestaltung des Verfahrens kann der Schritt Energiezufuhr, Erwärmung bis wenig unterhalb des Schmelzpunktes, Auftragen des wasserabsorbierenden Polymerpulvers (SAP) und Verbindung mit einer dritten Kunststoffolie wiederholt werden. So können ebenfalls 3- oder mehrlagige Folienverbunde hergestellt werden. Beim Aufbringen der dritten oder einer weiteren Kunststoffolie wird jeweils die Oberseite des bereits erhaltenen Folienverbundes erwärmt, so daß für die dritte oder ggf. weitere Kunststoffolie eine Einfachfolie mit einer Wasserdampfdurchlässigkeit von 5 bis 20 g/m²/24 Std. herangezogen wird.

Besonders geeignet ist ein derartiger Folienverbund zur Verpackung von Kartoffelchips oder anderem Salzgebäck, das lange backfrisch und kross bleiben soll.

### Beispiel 1: Verbundfolie mit SAP

Aufbau der Folie
Biaxial gereckte Polypropylenfolie, Stärke 12 µm, Klebelackschicht 5 g/m² atro.
Biaxial gereckte coextrudierte, beidseitig siegelbare Polypropylenfolie, Stärke 35 µm.
Der Klebelack setzt sich zusammen aus:
- 5,0: Gew.-Teilen Polyätherpolyurethan mit endständigen Hydroxylgruppen
- 2,4: Gew.-Teilen Polyätherpolyurethan mit endständigen Isocyanatgruppen
- 4,0: Gew.-Teilen SAP (Natriumsalz eines Copolymers aus Acrylsäure mit Polyvinylalkohol.
Lösungsmittel: Methyl-Ethyl-Keton (MEK)
Festkörpergehalt: 35 %

### Vergleichsbeispiel 1:

Gleicher Aufbau wie Beispiel 1, jedoch ohne SAP im Klebelack.

Die Bestimmung der Wasserdampfdurchlässigkeit erfolgt nach DIN 53 122 bzw. ASTM E96-80.

Um den zeitlichen Verlauf der Wasserdampfdurchlässigkeit zu ermitteln, wurde ein Wasserdampfdurchlässigkeits-Meßgerät, Modell L80-4000 der Firma Dr. Georges H. Lyssy, Zollikon, Schweiz, herangezogen, das nach folgendem Prinzip arbeitet:

Das Gerät arbeitet nach einer dynamischen Meßmethode. Der Prüfling wird als Trennung zwischen einem Raum gesättigter Atmosphäre und einem Raum niedriger relativer Feuchte, welcher auch einen Feuchtefühler enthält, dichtend eingelegt. Zuerst wird das Gerät mit einer "Test-Standard"-Folie, deren Durchlässigkeit bekannt ist, geeicht. Es wird wiederholt bis zum konstanten Resultat die Zeit gemessen, die vergeht, bis der Raum niedriger Feuchte um einen stets gleichbleibenden kleinen Betrag zufolge der Durchlässigkeit der Folie aufgefeuchtet wird. Diese Zeit ist umgekehrt proportional der Durchlässigkeit. Der Mikroprozessor und der Rechner korrelieren diesen Eichwert bei den nachfolgenden Messungen von Prüfmustern mit den Prüfwerten, welche direkt in g/m² d mit allen Meßparametern auf das vom Drucker erstellte Prüfprotokoll ausgedruckt werden. Zur rascheren Erreichung des Gleichgewichts können hydrophile Muster extern vorklimatisiert werden.

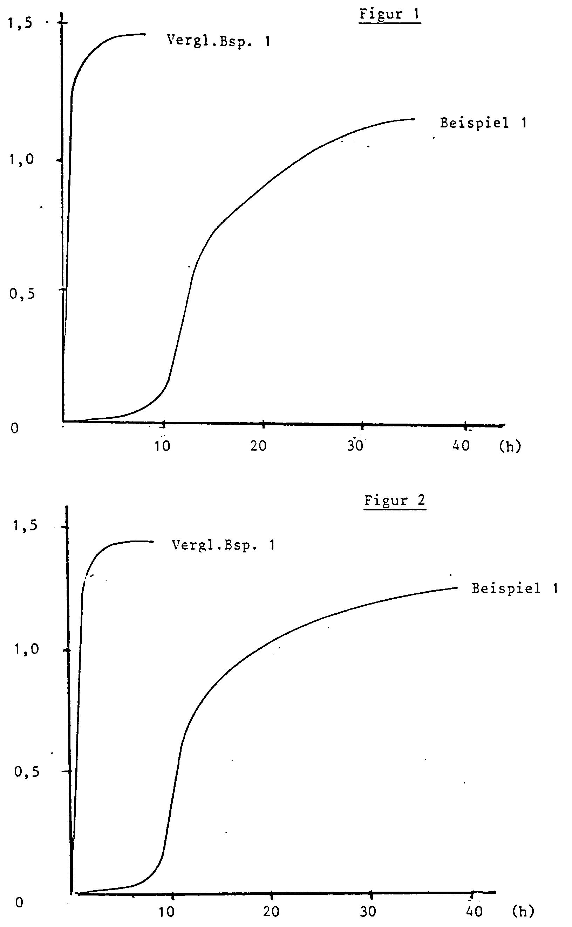

Die mit diesem Meßgerät ermittelte zeitliche Abhängigkeit zeigt die Figur 1. Die Verbundfolie aus Beispiel 1 war mit der 12 µm dicken Folie zum Feuchtraum des Meßgerätes angeordnet. Nach etwa 10 Std. beginnt die Feuchtigkeit durch die Verbundfolie zu wandern, der Endpunkt wird nach ca. 35 Std. erreicht.

Das Vergleichsbeispiel mit der Verbundfolie ohne SAP zeigt dagegen einen stark ansteigenden Kurvenverlauf, der vollständige Feuchtedurchschlag ist bereits nach ca. 5 Std. aufgetreten.

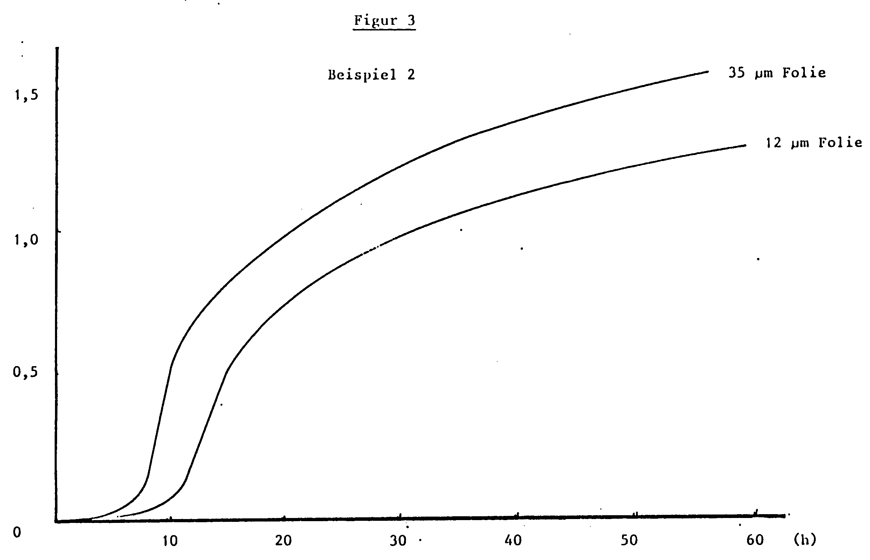

Figur 2 zeigt die Kurven der Messung mit der Lyssy-Apparatur, wobei dieses Mal die Verbundfolie mit der 35 µm dicken Folie zum Feuchtraum angeordnet war. Der Kurvenverlauf für das Beispiel 1 und das Vergleichsbeispiel ist wie oben, jedoch wird bei Übereinanderprojektion der Kurven aus Figur 2 auf Figur 1 überraschenderwelse festgestellt, daß der Feuchtigkeitsdurchschlag bei der erfindungsgemäßen Verbundfolie etwas schneller erfolgt, obwohl die dickere Folie als erste Sperrschicht gegenüber dem Feuchtraum angeordnet ist. Eine Erklärung hierfür gibt es nicht. Bei beiden Meßreihen betrug die Feuchte auf der Feuchtraumseite der Lyssy-Apparatur 90 % r. F. bei 38 °C.

### Beispiel 2:

Bei dieser Ausführung wurden die gleichen Ausgangsfolien wie in Beispiel 1 verwendet. Der Klebelack zum Verbinden der beiden Folien setzte sich wie folgt zusammen:
- 5,6: Gew.-Teile Polyätherpolyurethan mit endständigen Hydroxylgruppen
- 1,6: Gew.-Teile Polyätherpolyurethan mit endständigen Isocyanatgruppen
- 4,0: Gew.-Teile SAP (Natriumsalz eines Copolymers von Acrylsäure mit Polyvinylalkohol.

Die Komponenten wurden ebenfalls in Methylethylketon (MEK) gelöst. Die Klebelacklösung hatte einen Festkörpergehalt von 35 %, Auftrag 5 g/m². Die so erhaltenen Verbundfolien wurden ebenfalls dem Test mit der Lyssy-Apparatur unterzogen.

In Figur 3 ist die zeitliche Abhängigkeit des Feuchtedurchschlags aufgetragen. Es zeigt wiederum, daß bei Anordnung der dünneren Folie gegenüber dem Feuchtraum die bessere Sperrwirkung erzielt wird.

Gegenüber Beispiel 1 wird jedoch eine verbesserte Sperrwirkung erzielt, da der Feuchteausgleich erst nach ca. 60 Std. erreicht wird.

### Beispiel 3:

Eine dreilagige Verbundfolie mit dem Aufbau
- biaxial gereckte Polypropylenfolie, 12 µm
- Klebelackschicht 5 g/m²
- biaxial gereckte Polypropylenfolie, 12 µm
- Klebelackschicht 5 g/m²
- biaxial gestreckte coextrudierte, beidseitig siegelbare Polypropylenfolie, 35 µm
wird hergestellt, wobei die Klebelackzusammensetzung dem Beispiel 1 entspricht.

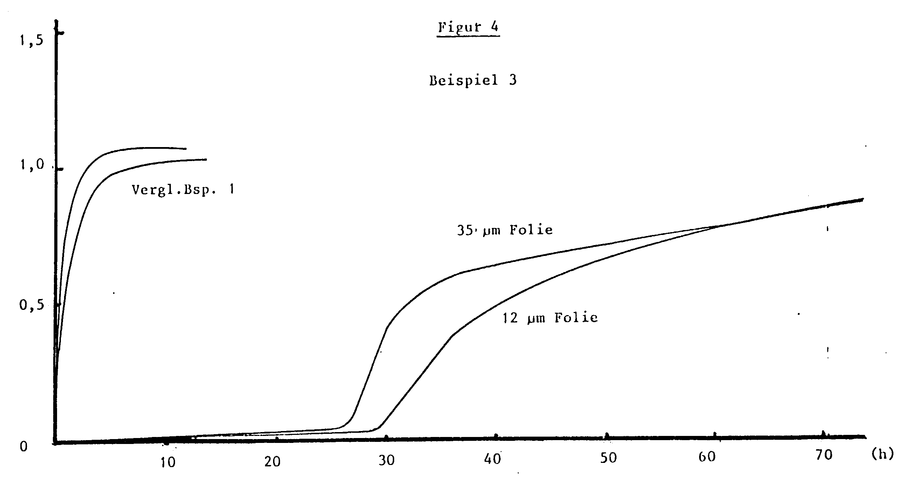

Die Ergebnisse des Testes mit der Lyssy-Apparatur sind in Figur 4 aufgetragen. Zum Vergleich mit einer nicht erfindungsgemäßen Verbundfolie ist nochmals die Zeitabhängigkeit des Feuchtedurchschlags von Vergleichsbeispiel 1 mit eingetragen. Der Beginn des Feuchtedurchschlags setzt erst nach 26 bzw. 29 Std. ein, nach 70 Std. Testzeit hat noch kein vollständiger Feuchteausgleich stattgefunden. Dieser tritt erst nach 100 Std. auf.

Damit ist eine ganz wesentliche Verbesserung der erfindungsgemäßen Verbundfolie nachgewiesen, wobei wiederum die vorteilhafte Anordnung der dünneren Folie nach der Feuchtraumseite bezüglich der Sperrwirkung beobachtet werden kann.

## Patentansprüche

1. Folienverbund mit verbesserter Wasserdampfsperre zur Verpackung feuchtigkeitsempfindlicher Güter, wobei mindestens eine 1. Kunststoffolie mit einer oder mehreren Kunststoffolien gleicher oder unterschiedlicher Zusammensetzung mittels Verklebung verbunden ist und wobei die Klebeschicht ein wasserabsorbierendes Polymerpulver in einem Anteil von 10 bis 50 Gew.% gleichmäßig verteilt enthält, dadurch gekennzeichnet, daß der Folienverbund bezüglich der Wasserdampfdurchlässigkeit der Einzelkunststoffolien einen asymmetrischen Aufbau aufweist, wobei die dem Verpackungsgut zugekehrte Kunststoffolie eine Wasserdampfdurchlässigkeit von 2 bis 10 g/m² · 24 h bei 38 °C und 90 % r. F., die nach außen gekehrte Kunststoffolie eine Wasserdampfdurchlässigkeit von 5 bis 20 g/m² · 24 h bei 38 °C und 90 % r. F. aufweist.

2. Folienverbund nach Anspruch 1, dadurch gekennzeichnet, daß die mittels Verklebung miteinander verbundenen Kunststoffolien aus biaxial gerecktem Polyolefin und/oder Polyester bestehen.

3. Folienverbund nach Anspruch 1 und Anspruch 2, dadurch gekennzeichnet, daß die Verklebung durch einen auf die eine Kunststoffolie aufgetragenen lösungsmittelhaltigen oder lösungsmittelfreien Kleber oder Heißschmelzkleber gebildet wird, in dem das wasserabsorbierende Polymerpulver (SAP) in einem Anteil von 10 bis 50 Gew.% gleichmäßig verteilt ist und wobei die durch den Kleber gebildete Schicht eine Stärke von 1 bis 10 µm aufweist.

4. Folienverbund nach einem der Ansprüche 1 bis 3, dadurch gekennzeichnet, daß die Kunststoffolie mit einer Wasserdampfdurchlässigkeit von 2 bis 10 g/m² · 24 h eine Folienstärke von 20 bis 40 µm und die Kunststoffolie mit einer Wasserdampfdurchlässigkeit von 5 bis 20 g/m² · 24 h eine Folienstärke von 12 bis 25 µm aufweist.

## Claims

1. Film composite with improved water-vapour barrier for packaging moisture-sensitive products, in which at least one 1st plastic film is adhesively bonded to one or more plastic films of the same or different composition, and in which the adhesive layer contains uniformly distributed water-absorbent polymer powder in an amount of from 10 to 50% by weight, characterized in that the film composite has an asymmetrical structure with respect to the water-vapour permeability of the individual plastic films, where the plastic film facing the package contents has a water-vapour permeability of from 2 to 10 g/m² · 24 h at 38°C and 90% relative humidity, and the plastic film facing outward has a water-vapour permeability of from 5 to 20 g/m² · 24 h at 38°C and 90% relative humidity.

2. Film composite according to Claim 1, characterized in that the plastic films adhesively bonded to one another comprise biaxially stretched polyolefin and/or polyester.

3. Film composite according to Claim 1 and Claim 2, characterized in that the bond is formed by a solvent-containing or solvent-free adhesive or a hot-melt adhesive in which the water-absorbent polymer powder (SAP) is uniformly distributed in an amount of from 10 to 50% by weight is applied to one plastic film, and the layer formed by the adhesive has a thickness of from 1 to 10 µm.

4. Film composite according to one of Claims 1 to 3, characterized in that the plastic film having a water-vapour permeability of from 2 to 10 g/m² · 24 h has a film thickness of from 20 to 40 µm and the plastic film having a water-vapour permeability of from 5 to 20 g/m² · 24 h has a film thickness of from 12 to 25 µm.

## Revendications

1. Feuille composée à barrière améliorée contre la vapeur d'eau, servant à l'emballage de produits sensibles à l'humidité, dans laquelle au moins un film en matière plastique est lié par la voie du collage à un ou à plusieurs films en matière plastique de même composition ou de composition différente et dans laquelle la couche de colle contient, de manière uniformément répartie, une poudre polymère absorbant l'eau en une proportion de 10 à 50 % en poids, caractérisée en ce que, en relation avec la perméabilité à la vapeur d'eau des films individuels en matière plastique, la feuille composée présente un assemblage asymétrique dans lequel le film en matière plastique disposé du côté du produit emballé possède une perméabilité à la vapeur d'eau de 2 à 10 g/m² · 24 h pour 38°C et 90 % d'humidité relative et le film en matière plastique disposé du côté extérieur possède une perméabilité à la vapeur d'eau de 5 à 20 g/m² · 24 h pour 38°C et 90 % d'humidité relative.

2. Feuille composée suivant la revendication 1, caractérisée en ce que les films en matière plastique reliés entre eux par collage sont constitués de polyoléfine et/ou de polyester étirés biaxialement.

3. Feuille composée suivant la revendication 1 et la revendication 2, caractérisée en ce que le collage est réalisé au moyen d'une colle, qui est appliquée sur l'un des films en matière plastique et qui contient du solvant ou est exempte de solvant ou est une colle à fusion à chaud, colle dans laquelle la poudre polymère (PAS) absorbant l'eau est répartie uniformément en une proportion de 10 à 50 % en poids et en ce que la couche formée par la colle présente une épaisseur de 1 à 10 µm.

4. Feuille composée suivant l'une des revendications 1 à 3, caractérisée en ce que le film en matière plastique avec une perméabilité à la vapeur d'eau de 2 à 10 g/m² · 24 h présente une épaisseur de film de 20 à 40 µm et que le film en matière plastique d'une perméabilité à la vapeur d'eau de 5 à 20 g/m² · 24 h présente une épaisseur de film de 12 à 25 µm.
